# EUROPEAN PATENT APPLICATION

(11) **EP 0 682 275 A1**
(43) Date of publication of application: **15.11.1995**
(21) Application number: 94202229.4
(22) Date of filing: 02.08.1994
(51) Int. Cl.: G02B 6/28

(54) **Method for forming a fused-fibre monolithic monomode coupler**

(30) Priority: 09.05.1994 IT MI940904
(71) Applicant: SIRTI S.p.A., I-20124 Milano (IT)
(72) Inventor: Pianciola, Aurelio, I-27045 Casteggio (Pavia) (IT); Maglio, Maurizio, I-20067 Paullo (Milano) (IT)
(74) Representative: Fusina, Gerolamo

(57) **Abstract**

A method for forming a monolithic monomode coupler of N optical fibres in which a longitudinally extending portion is created within which the N fibres are arranged to form a bundle, said N fibres being simultaneously maintained under tension, heat being applied indirectly in correspondence with said bundle, two fibre holding masks being provided for geometrically arranging the N fibres of said bundle in a predetermined pattern. The application of heat is controlled in relation to said geometrical arrangement of said N fibres of said bundle, by means of a capsule completely enclosing said bundle in the radial direction and heated by heat sources not positioned within the structure. The capsule consists of two half-shells with a mating profile, for example of C-shaped profile.

## Description

This invention relates to a method for forming a fused-fibre monolithic monomode coupler.

A monolithic monomode coupler is a particular optical element for converting an optical signal passing through one fibre into optical signals distributed among more than one fibre.

Transmission of an optical signal within a fibre normally takes place by confining said signal within the fibre core, which is surrounded by a cladding of a material with a refractive index less than that of the core material. To enable a signal originating from one fibre to be shared by others, the cladding of all the fibres has to be at least partly destroyed over a certain length so that the cores of all the fibres are sufficiently close together to provide optical interaction.

To achieve this, heat has to be used to facilitate softening of the cores and cladding, followed by their controlled mutual copenetration.

The known methods of the state of the art for preparing a monolithic monomode coupler are as follows:
- direct fibre contact with the flame
- indirect heating via a collapsing tube containing the bundle of fibres to be connected together.

Both these methods suffer from considerable drawbacks and defects. Application of a direct flame makes it very difficult to uniformly distribute the heat flow over the entire cross-section of the fibre bundle concerned, and hence to achieve uniform softening of all the fibres. In addition the gas pressure results in deformation of the softened region, the deleterious effect of this being greater the more the final shape deviates from the required symmetry.

The flame is formed preferably by combustion of oxygen with propane or hydrogen. In either case the combustion gives rise to hydroxyl ions, which diffuse into the fibres with the undesirable effect of raising the attenuation peak due to these ions.

With the second method the fibres are inserted into a glass tube of suitable inner diameter or with a suitable number of grooves arranged in the required geometry. The tube collapses following heating, to induce thermal and mechanical stress differences resulting in a change in the propagation constants of the fibres arranged externally in the initial geometry.

A further drawback of this method is that the central fibre of the coupler has to be deprived of its acrylate coating for its entire length. Subsequent reapplication of the acrylate is complicated and very difficult from the technical viewpoint.

The object of the present invention is to provide a method for forming a monolithic monomode coupler which overcomes the aforesaid drawbacks.

This object is effectively achieved by a method for forming a monolithic monomode coupler of N fibres in which a longitudinally extending portion is created within which the N fibres are arranged to form a bundle, said N fibres being simultaneously maintained under tension, heat being applied indirectly in correspondence with said bundle, means being provided for geometrically arranging the N fibres of said bundle in a predetermined pattern, the application of heat being controlled in relation to said geometrical arrangement of said N fibres of said bundle.

Preferably said means comprise at least two masking elements provided with at least N housings to each receive a respective fibre, the use of two rotating perforated masking elements being particularly preferred, in which one of said N fibres is inserted into each hole. By rotating said masking elements said fibres are helically twisted to form the said bundle portion.

Preferably the indirect application of heat is achieved by means of a structure completely enclosing said bundle in the radial direction and heated by heat sources positioned not within the structure.

The structure must be constructed of a material having a melting point greater than the melting point of the fibre optic glass, for example quarts, so that the structure does not collapse during heating, and consists advantageously of two half-shells of mating profile.

Advantageously the method of heating said structure and its particular geometrical configuration are such as to achieve a profile of heat flow towards the enclosed fibre portion which is totally homologous with the geometrical profile of said fibre bundle portion. In particular, very advantageously, the physical thickness of the enclosing structure is a function of its length, such as to transfer maximum heat into the central region of said fibre bundle portion, said heat transfer gradually decreasing towards the two opposite ends of said structure.

Further characteristics and advantages of the present invention will be more apparent from the description given hereinafter by way of non-limiting example, with reference to the accompanying figures, in which:
Figure 1 is a front view of a perforated rotating masking element with 7 holes used in the method of the present invention;
Figure 2 is a section through a capsule comprising two half-shells arranged about a fibre interlacement according to the present invention;
Figure 3 is a schematic view of an assembly of units for implementing the method of the present invention;
Figures 4a, 4b, 5a, 5b, 6, 7 and 8 show in diagrammatic form some results of tests carried out on a monomode coupler formed by the method of the present invention.

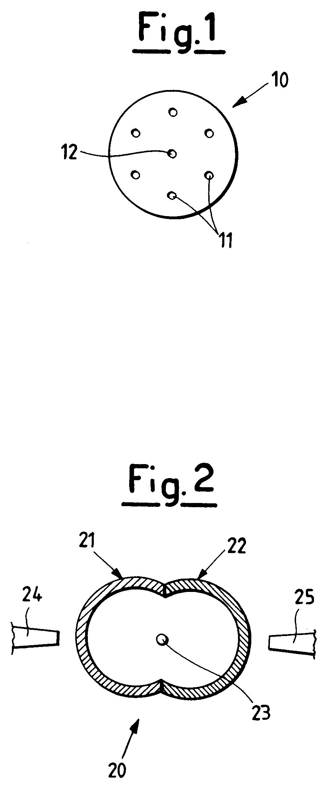

In Figure 1 the reference numeral 10 indicates a rotating masking element comprising six holes 11 arranged circumferentially and one hole 12 positioned in the centre. When forming a 1x7 coupler, one optical fibre (not shown) is inserted into each of these holes.

Figure 2 shows a section through a capsule 20 within which copenetration takes place between the cores of the interlaced fibres. As can be seen, said capsule 20 consists of two half-shells 21 and 22 of C cross-section which mate along their open perimeter. The fibre interlacement 23 is arranged centrally within the capsule 20, and two heating torches 24 and 25 are arranged externally to said capsule 20 in diametrically opposite positions. The particular shape of the capsule and the spatial arrangement of the two heat sources achieve the desirable condition that the heat flow is constant over the entire perimeter of the interlacement 23. In this respect the hottest points of the capsule 20 are those most distant from the interlacement whereas vice versa the coldest are the closest, and hence viewed under a larger angle. This construction achieves perfect temperature uniformity over the fibre interlacement 23, which is not achievable with a traditional system.

In addition, as the enclosure does not act mechanically on the fibres, their geometrical-spatial distribution is not inappropriately disturbed thereby.

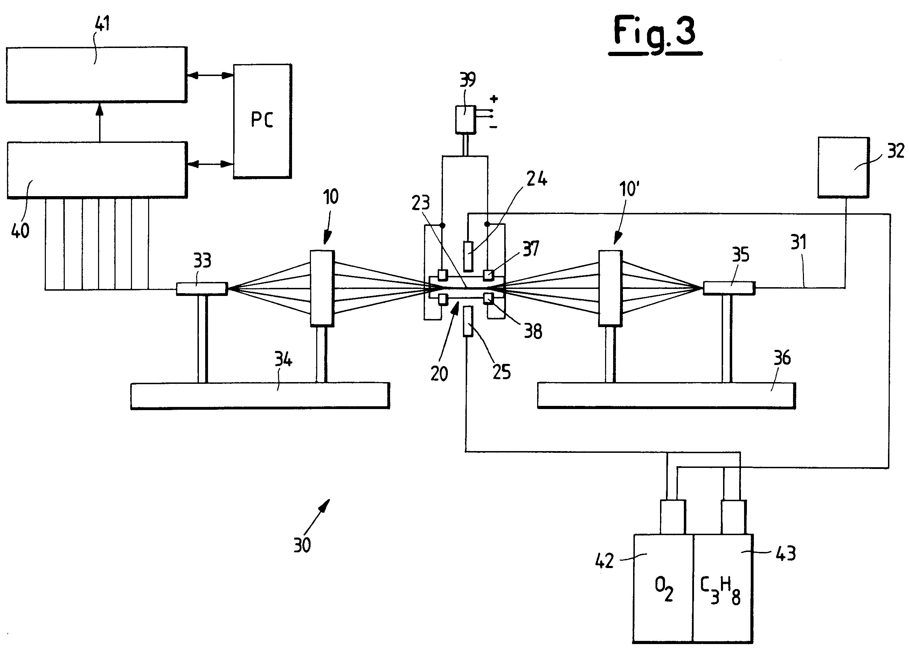

Figure 3 shows schematically a bench 30 usable for implementing the method of the present invention.

It consists of two movable guides 34 and 36, to which there are rigidly connected two fixing points 33 and 35 and, in a manner able to rotate, two masking elements 10 and 10' such as that shown in Figure 1. At the fixing point 35 there arrives from an optical signal generator 32 a cable consisting of a number of optical fibres, which are separated from each other within said fixing point, to be inserted into a respective hole in the masking element 10' fixed to the guide 36. On the other side of the masking element 10' these fibres are again combined into an interlacement 23, about which a capsule 20 is formed, its two half-shells being retained one against the other by two jaws 37 and 38 controlled by an electromagnet 39. To the side of the capsule 20 there are positioned two heating torches connected to an oxygen tank 42 and a propane tank 43. On leaving the capsule 20 the fibres separately enter the masking element 10 fixed to the guide 34, to then again combine at the fixing point 33. They leave this latter for insertion into an optical signal receiving and measurement apparatus 40 connected to a data display instrument 41.

In the region in which the interlacement 23 is formed, the fibres are deprived of their primary coating for a few centimetres and their cladding diameter is reduced by chemical attack. The fibres are also put under tension by the effect of weights (not shown) positioned externally to the fixing points 33 and 35.

The interlacement 23 is formed by mutually rotating the two masking elements 10 and 10'.

When the bench 30 has been fitted out, the apparatus 32 simultaneously generates two optical signals of different wavelengths along the central fibre of the cable 31, and the optical powers received at the exit of all the fibres are measured. At this point the torches 24 and 25 are lit and, after a preheating stage to bring the interlacement temperature to a level such as to cause the vitreous material of the fibres to soften, the movable guides 34 and 36 are operated, possibly also again mutually rotating 10 and 10', to commence the elongation and tapering stage, in which the different fibres tend to penetrate one into another to form a single body. Simultaneously the exit optical power is kept monitored by the display instrument 41, and when this optical power reaches the required value in terms of insertion loss and uniformity of the optical signal, the heating process with simultaneous elongation and twisting are suspended by halting the movement of the movable guides 34 and 36 and extinguishing the torches 24 and 25.

To increase the cooling rate the electromagnet 39 can be operated to cause the jaws 37 and 38 to open the capsule 20 by withdrawing its half-shells from each other. This facility for considerably increasing the cooling rate is very useful because it reduces the phenomenon of drift of the chosen point of operation, this phenomenon being due to latent inertia in the still too soft vitreous mass subjected to thermal and stress gradients.

The method of the present invention hence also solves the problem of controlling the difference between the propagation constant of the most outer fibres and that of the inner fibres to obtain the desired spectral behaviour. In this respect, the method of the invention eliminates any radial compression force on the outer fibres.

Because of the indirect application of heat, the fibres do not run the risk of absorbing hydroxyl ions and hence do not present significant attenuation peaks.

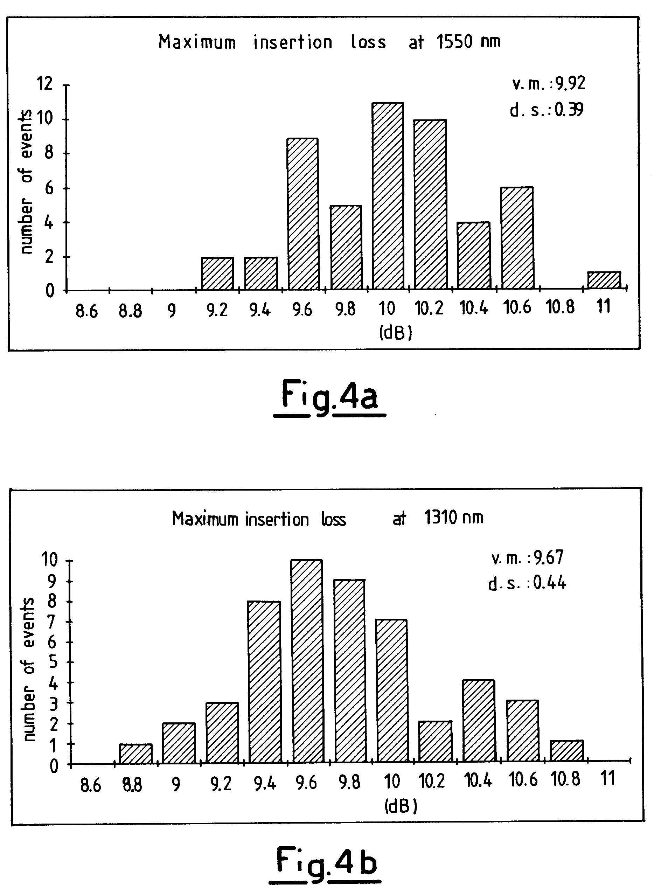

Figures 4a and 4b show the results of tests conducted on a 1x7 monomode coupler formed by the method of the present invention, charting the extent of stochastic attenuation at the two wavelengths delimiting the fibre optic signal transfer band.

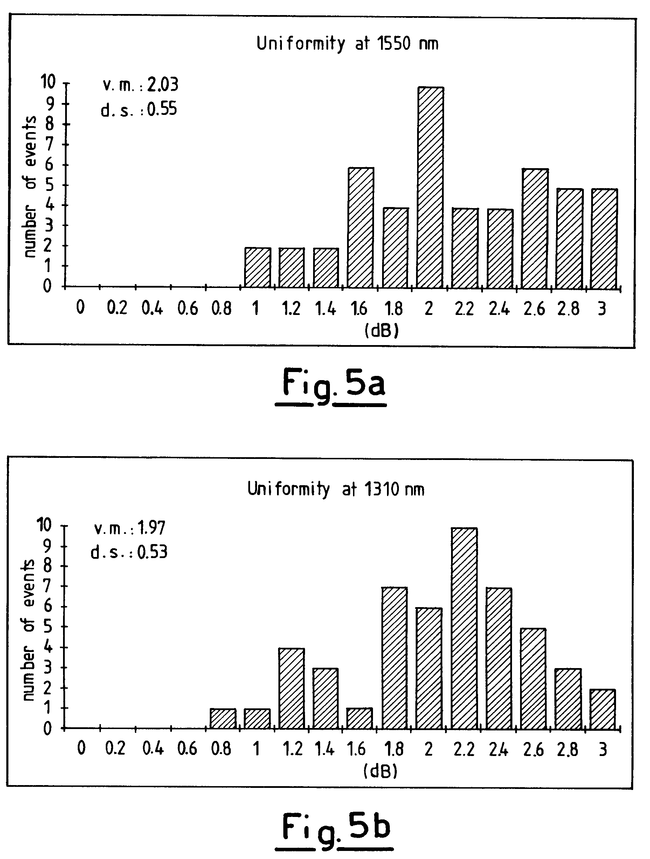

Figures 5a and 5b show for the same group of tests the divergencies between the maximum and minimum value of the signal transmitted along various fibres leaving the coupler.

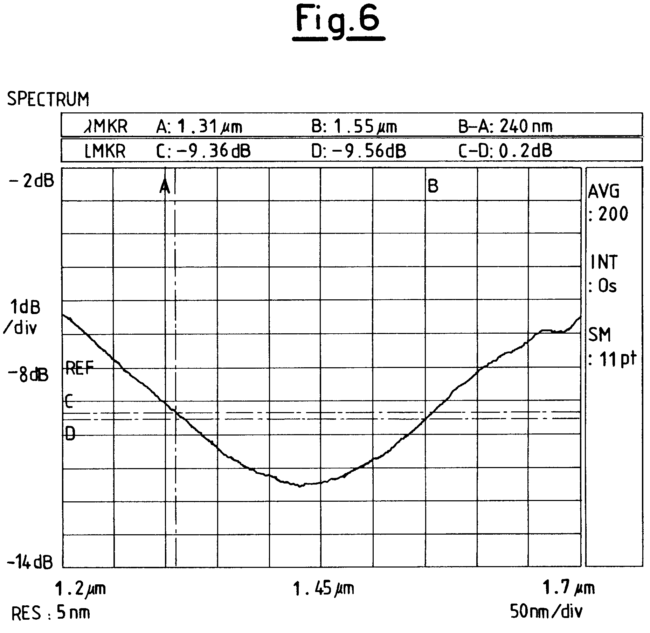

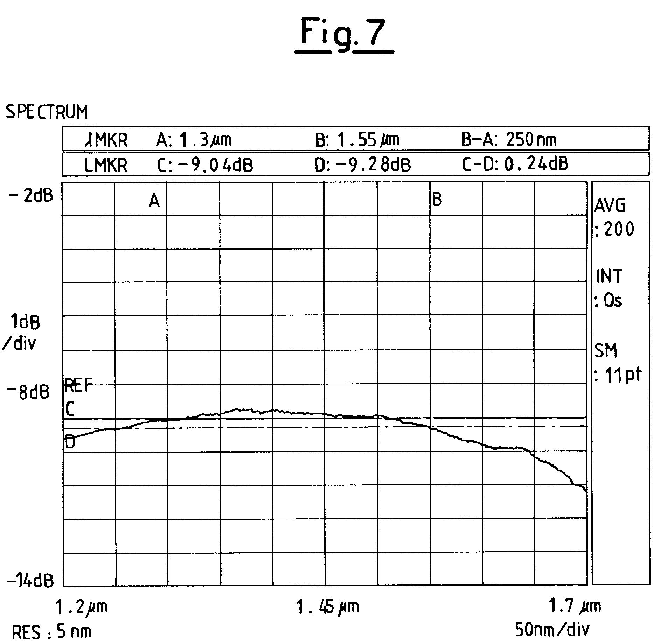

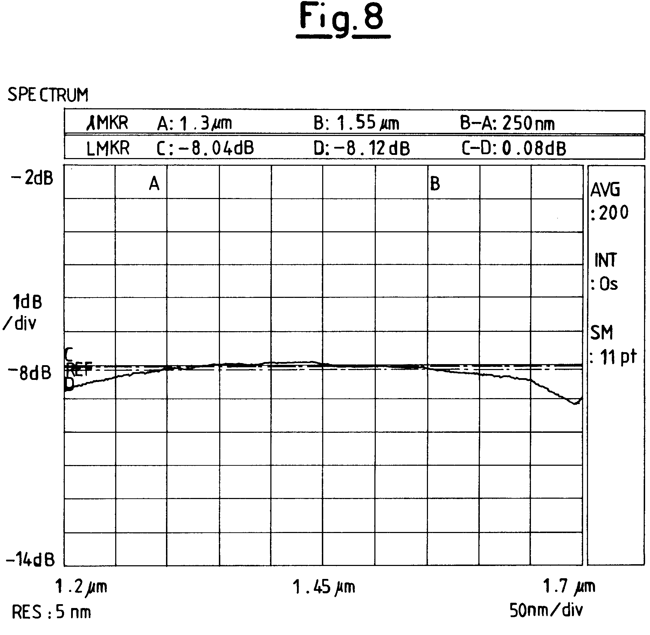

Figures 6, 7 and 8 show the the signal attenuation profile for the central optical fibre and for two chosen peripheral fibres as a function of the wavelength. It can be seen that for the two peripheral fibres (but also for the other fibres, based on results which are not illustrated) there is no peak in the intermediate region, as there would typically be for couplers formed by conventional methods.

## Claims

1. A method for forming a monolithic monomode coupler of N fibres in which a longitudinally extending portion is created within which the N fibres are arranged to form a bundle, said N fibres being simultaneously maintained under tension, heat being applied indirectly in correspondence with said bundle, characterised in that means are provided for geometrically arranging the N fibres of said bundle in a predetermined pattern, the application of heat being controlled in relation to said geometrical arrangement of said N fibres of said bundle.

2. A method for forming a coupler as claimed in claim 1, characterised in that said means comprise at least two masking elements provided with at least N housings to each receive a respective fibre.

3. A method for forming a coupler as claimed in claim 2, characterised in that said at least two masking elements are perforated and rotary, into each hole there being inserted one of said N fibres.

4. A method for forming a coupler as claimed in claim 1, characterised in that said bundle is formed as a helical twist by rotating said means.

5. A method for forming a coupler as claimed in claim 1, characterised in that the indirect application of heat is achieved by means of a structure completely enclosing said bundle in the radial direction and heated by heat sources positioned not within the structure.

6. A method for forming a coupler as claimed in claim 5, characterised in that said completely enclosing structure consists of two half-shells of mating profile.

7. A method for forming a coupler as claimed in claim 6, characterised in that each of said two half-shells has a C-shaped cross-section perpendicular to its longitudinal axis.

8. A method for forming a coupler as claimed in claim 5, characterised in that the thickness of said structure varies in the direction longitudinal to the bundle of said N fibres.

9. A method for forming a coupler as claimed in claim 5, characterised in that said structure is of a material having a melting point greater than the melting point of the glass of the optical fibres.

10. A method for forming a coupler as claimed in claim 9, characterised in that said structure is of quartz construction.

11. A method for forming a coupler as claimed in claim 1, characterised in that said N fibres undergo an elongation process.

12. A method for forming a coupler as claimed in the preceding claims, characterised in that of said N fibres, one is connected at one end of said twist to an optical signal generator apparatus, all the N fibres being connected at the other end of said twist to an optical signal receiving and measurement apparatus.

13. A method for forming a coupler as claimed in claim 12, characterised in that the generator apparatus emits two optical signals of different wavelengths, their optical power being measured by the receiving apparatus, the heating and simultaneous elongation process being suspended when said optical power attains the required value in terms of insertion loss and uniformity of the optical signal.

14. A method for forming a coupler as claimed in claim 13, characterised in that on suspending said process of heating and simultaneous elongation, the two half-shells are withdrawn from each other.

15. A method for forming a coupler as claimed in claim 5, characterised in that said heat sources consist of oxygen-propane combustion flames, they being positioned symmetrically about the completely enclosing structure.
